# EUROPEAN PATENT SPECIFICATION

(11) **EP 4 617 893 B1**
(45) Date of publication and mention of the grant of the patent: **08.04.2026**
(21) Application number: 24187627.5
(22) Date of filing: 10.07.2024
(51) Int. Cl.: G06F 13/38, G06F 1/26, G06F 13/40, H04L 12/10, H04L 12/40, H04B 10/80, H02M 3/158, H04L 69/08, H01R 31/06

(54) **SIGNAL ADAPTER DEVICE AND NETWORK SYSTEM**
SIGNALADAPTERVORRICHTUNG UND NETZWERKSYSTEM
DISPOSITIF ADAPTATEUR DE SIGNAL ET SYSTÈME DE RÉSEAU

(30) Priority: 14.03.2024 TW 113109409
(43) Date of publication of application: 17.09.2025
(73) Proprietor: Moxa Inc., New Taipei City 242 (TW)
(72) Inventor: Li, Zong-Han, New Taipei City 242 (TW); Han, Jui-Cheng, New Taipei City 242 (TW)
(74) Representative: Straus, Alexander

(56) References cited:
- US-A1- 2015 078 740
- US-A1- 2019 342 124
- US-A1- 2019 361 834
- US-A1- 2024 039 224

## Description

### Field of the Invention

The present invention relates to a signal adapter device and a network system, and more particularly, to a signal adapter device and a network system whose output signal includes a data signal and a supply power.

### Background of the Invention

In the field of network, a switch may output data signals to various devices via optical fibers. In many scenarios of the industrial networks or home networks, some devices can only receive data signals from the copper wire signal lines, for example, a single-pair Ethernet (SPE) connector or an RJ-45 connector. Under the circumstance, the switch can be coupled to a signal adapter covered with a small package pluggable module and convert the data signal to be output by the SPE connector or the RJ-45 connector. In addition, some devices have very low power consumption, such as a light sensor, a temperature sensor, etc. If these devices can receive the data signals and supply power at the same time through the SPE connector or the RJ-45 connector, the devices do not need an external power supply. Therefore, how to make the output signal of the signal adapter include both data signals and supply power has become one of the goals of the industry.

D1(US 2019/361834 A1), D2(US 2024/039224 A1), D3(US 2019/342124) and D4(US 2015/078740 A1) draw up a search report. D1 is silent to mention the SFP module input standard. D2 discloses a SFP to Single Ethernet converter but is completely silent about providing additional power over the single pair Ethernet data line. D3 discloses inductors for deeding energy into the data path, but is silent about specific interface standards. D4 discloses an optical to power over Ethernet adapter and discloses in par. 0034: "Further, the Connection Interface device can support the PoE, PoE++ (90 W), and PoE3+ (180 W) protocols as well. ", which leads away from taking power from "to comply with the power specifications of the small form-factor pluggable module protocol SFF-8419; that is, the power provided by the SFP signal adapter device 20 is less than 1.0 watt, 1.5 watts or 2.0 watts".

### Summary of the Invention

Therefore, the present application is to provide a signal adapter device and a network system to solve the above problem.

This is achieved by a signal adapter device according to the independent claim 1, or a network system according to the independent claim 2 here below. The dependent claims pertain to corresponding further developments and improvements.

As will be seen more clearly from the detailed description following below, a signal adapter device is covered with a small form-factor pluggable (SFP) module. The signal adapter device includes an input interface; a transceiver, coupled to the input interface, configured to receive a first data signal through the input interface, and convert the first data signal into a second data signal; a boost circuit, coupled to the input interface, configured to receive a first supply power having a first voltage through the input interface, and convert the first supply power into a second supply power having a second voltage, wherein the second voltage is greater than the first voltage; a mixing circuit, coupled to the transceiver and the boost circuit, configured to mix the second data signal and the second supply power into an output signal; and an output interface, coupled to the mixing circuit, configured to output the output signal.

In another aspect, a network system includes a switch; a network terminal equipment; and a signal adapter device, coupled to the switch and the network terminal equipment, and covered with a small form-factor pluggable (SFP) module, the signal adapter device comprising: an input interface, coupled to the switch; a transceiver, coupled to the input interface, configured to receive a first data signal from the switch through the input interface, and convert the first data signal into a second data signal; a boost circuit, coupled to the input interface, configured to receive a first supply power having a first voltage from the switch through the input interface, and convert the first supply power into a second supply power having a second voltage, wherein the second voltage is greater than the first voltage; a mixing circuit, coupled to the transceiver and the boost circuit, configured to mix the second data signal and the second supply power into an output signal; and an output interface, coupled to the mixing circuit and the network terminal equipment, configured to output the output signal to the network terminal equipment.

### Brief Description of the Drawings

FIG. 1 is a schematic diagram of a network system according to an embodiment of the present invention.
FIG. 2 is a schematic diagram of the SFP signal adapter device according to an embodiment of the present invention.
FIG. 3 is a schematic diagram of a mixing circuit according to an embodiment of the present invention.
FIG. 4 is a schematic diagram of a network system according to another embodiment of the present invention.
FIG. 5 is a schematic diagram of a network system according to another embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

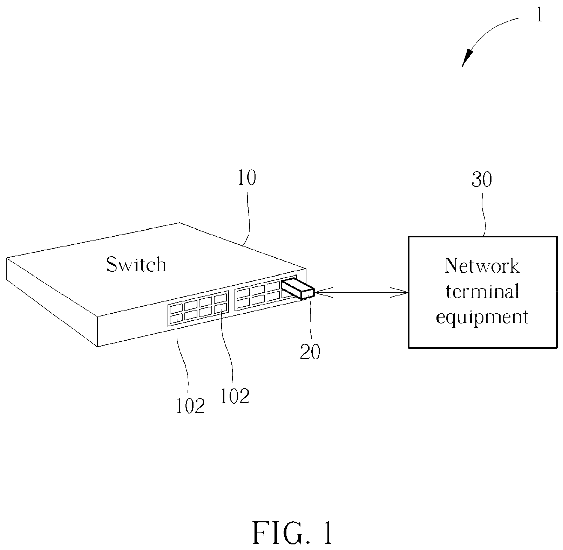

Please refer to FIG. 1. FIG. 1 is a schematic diagram of a network system 1 according to an embodiment of the present invention. The network system 1 includes a switch 10, a signal adapter device 20 and a network terminal equipment 30. The switch 10 includes a plurality of output ports 102. Each output port of the plurality of output ports 102 supports a small form-factor pluggable (SFP) module and is configured to transmit optical signals. The signal adapter device 20 is covered with the SFP module, and is configured to convert the optical signals into electrical signals. For convenience of description, the following is referred to as The SFP signal adapter device 20. It should be noted that the optical signals transmitted by the SFP signal adapter device 20 may be an optical signal in an optical fiber network format, but not limited thereto. When the SFP signal adapter device 20 is coupled to the output port 102, the network terminal equipment 30 may receive a supply power and transmit the data signals through the SFP signal adapter device 20 and the output port 102. It should be noted that the SFP signal adapter device 20 is required to comply with the power specifications of the small form-factor pluggable module protocol SFF-8419; that is, the power provided by the SFP signal adapter device 20 is less than 1.0 watt, 1.5 watts or 2.0 watts. Therefore, the required power for the normal operation of the network terminal equipment 30 must also be less than the power provided by the SFP signal adapter device 20. In other words, the network terminal equipment 30 may include a light sensor, a temperature sensor, etc. that consumes less power, but not limited thereto. In addition, compared with the power over Ethernet (PoE) specification in IEEE 802.3af, the power provided by the PoE is as high as 15.4 watts. Therefore, the solution of the PoE is not suitable for the SFP signal adapter device 20 of the embodiment of the present invention.

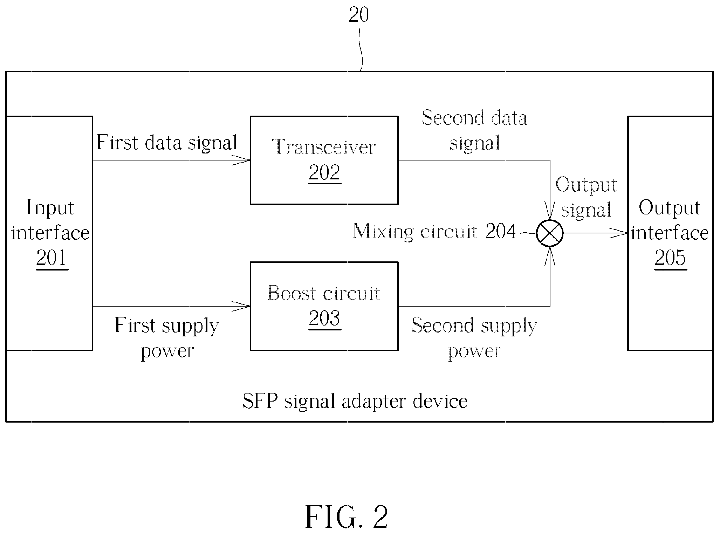

In detail, please refer to FIG. 2. FIG. 2 is a schematic diagram of the SFP signal adapter device 20 according to an embodiment of the present invention. In the embodiment, the SFP signal adapter device 20 includes an input interface 201, a transceiver 202, a boost circuit 203, a mixing circuit 204 and an output interface 205. The input interface 201 is configured to couple to the switch 10 through the output port 102. The transceiver 202 is coupled to the input interface 201, and is configured to receive a first data signal from the switch 10 through the input interface 201 and the output port 102 and convert the first data signal into a second data signal. It should be noted that the output port 102 and the output interface 201 may be standard SFP male and female connectors respectively, and the first data signal from the switch 10 is the optical signal. The boost circuit 203 is coupled to the input interface 201, and is configured to receive a first supply power having a first voltage from the switch 10 through the input interface 201 and the output port 102 and convert the first voltage into a second supply power having a second voltage. It should be noted that the second voltage is greater than the first voltage; that is, the first supply power is boosted to the second supply power to be provided to subsequent devices. The mixing circuit 204 is coupled to the transceiver 202 and the boost circuit 203, and is configured to mix the second data signal and the second supply power into an output signal. The output interface 205 is coupled to the mixing circuit 204, and is configured to output the output signal to the network terminal equipment 30. It should be noted that the output interface 205 may be a connector that complies with an SPE standard (for convenience of description, hereafter referred to as the SPE connector) or an RJ-45 connector, but not limited thereto. In other words, the second data signal, the second supply power and the output signal are electrical signals that may be transmitted through the SPE connector or the RJ-45 connector. The SPE connector and its corresponding twisted pair, or the RJ-45 connector and its corresponding multiple-twisted wires are well known in the art, so it is not repeated here.

In short, the output signal of the SFP signal adapter device 20 includes the data signal and the supply power, so the network terminal equipment 30 may operate normally without the external power supply.

It should be noted that FIG. 1 and FIG. 2 are only embodiments of the present invention, and those skilled in the art may make appropriate adjustments according to the system requirements. For example, if the output interface 205 is the SPE connector, the SPE connector needs to comply with the specifications and the explosion-proof safety requirements of IEEE 802.3cg. In detail, the SPE connector needs to comply with the power supply standards class A and class C of the specification TS10186. The power supply standard class A specifies a maximum power supply voltage of 15 volts and a minimum power supply of 0.54 watts, and the power supply standard class C specifies a maximum power supply voltage of 15 volts and a minimum power supply of 1.11 watts. In an embodiment, the first supply power provided by the switch 10 may be a system power supply of 3.3 volts. The boost circuit 203 boosts the first supply power of 3.3 volts into the second supply power of 15 volts to comply the power supply standard class A or class C. Specifically, the boost circuit 203 may be a boost converter, a flyback converter, a (single-ended primary inductance converter or a Ćuk converter, but not limited thereto. For example, the boost converter includes a switch control circuit, diodes, energy storage inductors and passive components such as decoupling capacitors and feedback resistors. The design principle of the boost converter and other boost circuits should be well known in the art, so it is not repeated here.

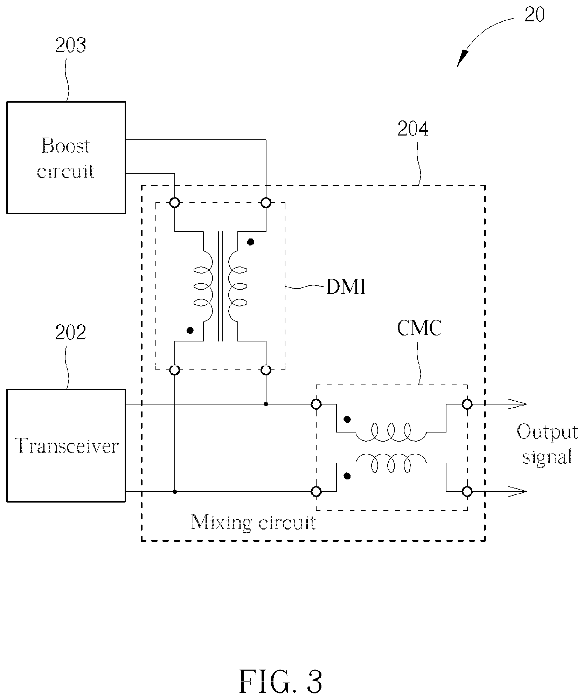

Please refer to FIG. 3. FIG. 3 is a schematic diagram of the mixing circuit 204 according to an embodiment of the present invention. In the embodiment, the mixing circuit 204 is an inductive coupling circuit, which includes a differential mode inductor DMI and a common mode inductor CMC. As shown in FIG. 3, the differential mode inductor DMI and the common mode inductor CMC couple the received second data signal and the received second supply power into the output signal. In another embodiment, the mixing circuit 204 may be a power injection circuit for injecting the second supply power into the second data signal to generate the output signal. The design principles of the inductive coupling circuit and the power injection circuit should be well known in the art, so they are not repeated here.

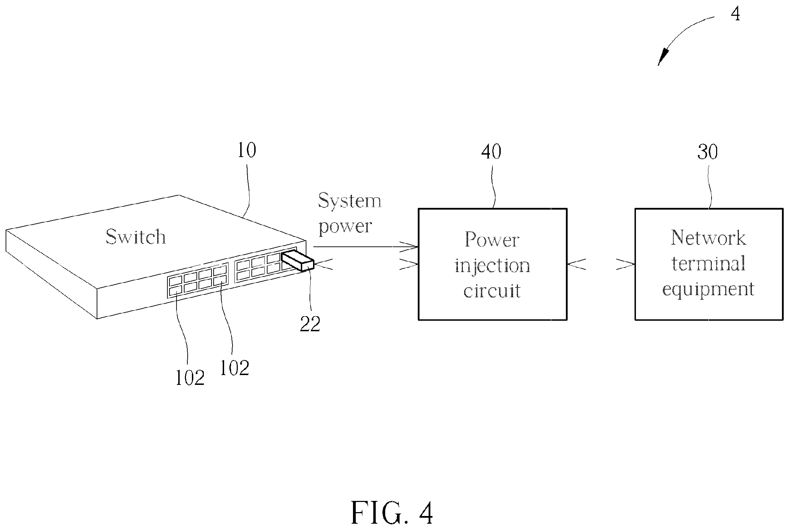

Please refer to FIG. 4. FIG. 4 is a schematic diagram of a network system 4 according to an embodiment of the present invention. The network system 4 is derived from the network system 1, so the same components are represented by the same symbols. The differences between the network system 4 and the network system 1 are an SFP signal adapter device 22 and an power injection circuit 40. In the embodiment, the SFP signal adapter device 22 converts the first data signal from the switch 10 into the second data signal, and directly outputs the second data signal to the power injection circuit 40. In addition, the SFP signal adapter device 22 uses a power processing circuit to replace the boost circuit 203 in the SFP signal adapter device 20, and the SFP signal adapter device 22 directly outputs the system power from the switch 10 to the power injection circuit 40 through the power processing circuit. The power injection circuit 40 may inject the system power into the second data signal and generate the output signal. In this way, after receiving the output signal, the network terminal equipment 30 may operate normally without the external power supply.

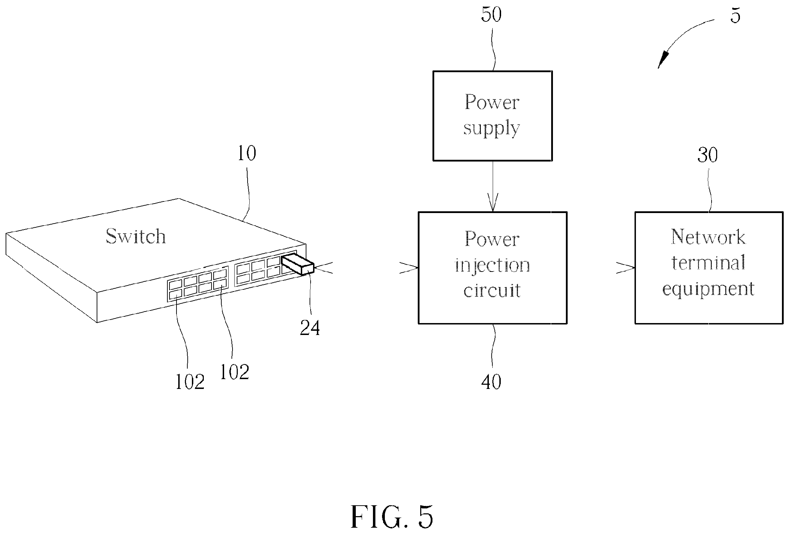

Please refer to FIG. 5. FIG. 5 is a schematic diagram of a network system 5 according to an embodiment of the present invention. The network system 5 is derived from the network system 4, so the same components are represented by the same symbols. The differences between the network system 5 and the network system 4 are the SFP switching device 24 and a power supply 50. In the embodiment, the SFP switching device 24 converts the first data signal from the switch 10 into the second data signal, and directly outputs to the power injection circuit 40. In addition, the power supply 50 provides an additional supply power to the power injection circuit 40. The power injection circuit 40 may inject the additional supply power into the second data signal and generate the output signal. In this way, after receiving the output signal, the network terminal equipment 30 may operate normally without the external power supply.

In summary, the SFP switching device of the present invention may convert the optical signal from the switch into the electrical signal, and then mix the system power and the electrical signal from the switch into the output signal. In this way, compared with the prior art, the output signal provided from the SFP switching device of the present invention may allow the terminal equipment to operate normally without connecting the external power supply to the terminal equipment.

## Claims

1. A signal adapter device (20), covered with a small form-factor pluggable, SFP, module, wherein the signal adapter device (20) complies with the power specifications of the small form-factor pluggable module protocol SFF-8419, the signal adapter device (20) **characterized by** comprising:
an input interface (201);
a transceiver (202), coupled to the input interface (201), configured to receive a first data signal through the input interface (201), and convert the first data signal into a second data signal;
a boost circuit (203), coupled to the input interface (201), configured to receive a first supply power having a first voltage through the input interface (201), and convert the first supply power into a second supply power having a second voltage, wherein the second voltage is greater than the first voltage;
a mixing circuit (204), coupled to the transceiver (202) and the boost circuit (203), configured to mix the second data signal and the second supply power into an output signal; and
an output interface (205), coupled to the mixing circuit (204), configured to output the output signal.

2. A network system (1) comprising:
a switch;
a network terminal equipment; and
a signal adapter device (20), coupled to the switch and the network terminal equipment,
and covered with a small form-factor pluggable, SFP, module, wherein the signal adapter device (20) complies with the power specifications of the small form-factor pluggable module protocol SFF-8419, the signal adapter device (20) **characterized by** comprising:
an input interface (201), coupled to the switch;
a transceiver (202), coupled to the input interface (201), configured to receive a first data signal from the switch through the input interface (201), and convert the first data signal into a second data signal;
a boost circuit (203), coupled to the input interface (201), configured to receive a first supply power having a first voltage from the switch through the input interface (201), and convert the first supply power into a second supply power having a second voltage, wherein the second voltage is greater than the first voltage;
a mixing circuit (204), coupled to the transceiver (202) and the boost circuit (203), configured to mix the second data signal and the second supply power into an output signal; and
an output interface (205), coupled to the mixing circuit (204) and the network terminal equipment, configured to output the output signal to the network terminal equipment.

3. The signal adapter device (20) of claim 1 or the network system (1) of claim 2, **characterized in that** the boost circuit (203) is a boost converter, a flyback converter, a single-ended primary inductance converter or a Ćuk converter.

4. The signal adapter device (20) of claim 1 or the network system (1) of claim 2, **characterized in that** the mixing circuit (204) is an inductive coupling circuit, configured to couple the second supply power and the second data signal into the output signal.

5. The signal adapter device (20) of claim 1 or the network system (1) of claim 2, **characterized in that** the mixing circuit (204) is a power injection circuit configured to inject the second supply power into the second data signal to generate the output signal.

6. The signal adapter device (20) of claim 1 or the network system (1) of claim 2, **characterized in that** the first voltage is 3.3 volts, and the second voltage is 15 volts.

7. The signal adapter device (20) of claim 1 or the network system (1) of claim 2, **characterized in that** an output power of the output signal is greater than 0.54 watts.

8. The signal adapter device (20) of claim 1 or the network system (1) of claim 2, **characterized in that** the input interface (201) comprises an SFP male connector or an SFP female connector, and the first data signal is an optical signal.

9. The signal adapter device (20) of claim 1 or the network system (1) of claim 2, **characterized in that** the output interface (205) comprises a single-pair Ethernet (SPE) connector or an RJ-45 connector.

## Patentansprüche

1. Signaladaptervorrichtung (20), die mit einem *Small-Form-Factor-Pluggable-,* SFP, Modul abgedeckt ist, worin die Signaladaptervorrichtung (20) den Leistungsspezifikationen des SFF-8419-Protokolls für SFP-Module entspricht, worin die Signaladaptervorrichtung (20) **dadurch gekennzeichnet ist, dass** diese umfasst:
eine Eingangsschnittstelle (201);
einen Transceiver (202), der mit der Eingangsschnittstelle (201) gekoppelt ist und ausgestaltet ist, ein erstes Datensignal über die Eingangsschnittstelle (201) zu empfangen und das erste Datensignal in ein zweites Datensignal umzuwandeln;
eine mit der Eingangsschnittstelle (201) gekoppelte Verstärkerschaltung (203), die ausgestaltet ist, eine erste Versorgungsspannung mit einer ersten Spannung über die Eingangsschnittstelle (201) zu empfangen und die erste Versorgungsspannung in eine zweite Versorgungsspannung mit einer zweiten Spannung umzuwandeln, worin die zweite Spannung größer ist als die erste Spannung;
eine Mischschaltung (204), die mit dem Transceiver (202) und der Verstärkerschaltung (203) gekoppelt und ausgestaltet ist, das zweite Datensignal und die zweite Versorgungsspannung zu einem Ausgangssignal zu mischen; und
eine Ausgangsschnittstelle (205), die mit der Mischschaltung (204) gekoppelt ist und ausgestaltet ist, das Ausgangssignal auszugeben.

2. Netzwerksystem (1), welches umfasst:
einen Schalter;
ein Netzwerkendgerät; und
eine Signaladaptervorrichtung (20), die mit dem Schalter und dem Netzwerkendgerät gekoppelt und mit einem *Small-Form-Factor-Pluggable-,* SFP, Modul abgedeckt ist, worin die Signaladaptervorrichtung (20) den Leistungsspezifikationen des SFF-8419-Protokolls für SFP-Module entspricht, worin die Signaladaptervorrichtung (20) **dadurch gekennzeichnet ist, dass** diese umfasst:
eine mit dem Schalter gekoppelte Eingangsschnittstelle (201);
einen mit der Eingangsschnittstelle (201) gekoppelten Transceiver (202), der ausgestaltet ist, ein erstes Datensignal vom Schalter über die Eingangsschnittstelle (201) zu empfangen und das erste Datensignal in ein zweites Datensignal umzuwandeln;
eine mit der Eingangsschnittstelle (201) gekoppelte Verstärkerschaltung (203), die ausgestaltet ist, eine erste Versorgungsspannung mit einer ersten Spannung vom Schalter über die Eingangsschnittstelle (201) zu empfangen und die erste Versorgungsspannung in eine zweite Versorgungsspannung mit einer zweiten Spannung umzuwandeln, worin die zweite Spannung größer ist als die erste Spannung;
eine Mischschaltung (204), die mit dem Transceiver (202) und der Verstärkerschaltung (203) gekoppelt und ausgestaltet ist, das zweite Datensignal und die zweite Versorgungsspannung zu einem Ausgangssignal zu mischen; und
eine Ausgangsschnittstelle (205), die mit der Mischschaltung (204) und dem Netzwerkendgerät gekoppelt und ausgestaltet ist, das Ausgangssignal an das Netzwerkendgerät auszugeben.

3. Signaladaptervorrichtung (20) nach Anspruch 1 oder das Netzwerksystem (1) nach Anspruch 2, **dadurch gekennzeichnet, dass** die Verstärkerschaltung (203) ein Verstärkungswandler, ein *Flyback-*Wandler, ein Einfachendiger-Primärinduktivitätswandler oder ein Cuk-Wandler ist.

4. Signaladaptervorrichtung (20) nach Anspruch 1 oder das Netzwerksystem (1) nach Anspruch 2, **dadurch gekennzeichnet, dass** die Mischschaltung (204) eine induktive Kopplungsschaltung ist, die ausgestaltet ist, die zweite Versorgungsleistung und das zweite Datensignal in das Ausgangssignal zu koppeln.

5. Signaladaptervorrichtung (20) nach Anspruch 1 oder das Netzwerksystem (1) nach Anspruch 2, **dadurch gekennzeichnet, dass** die Mischschaltung (204) eine Leistungseinspeisungsschaltung ist, die ausgestaltet ist, die zweite Versorgungsspannung in das zweite Datensignal einzuspeisen, um das Ausgangssignal zu erzeugen.

6. Signaladaptervorrichtung (20) nach Anspruch 1 oder das Netzwerksystem (1) nach Anspruch 2, **dadurch gekennzeichnet, dass** die erste Spannung 3,3 Volt und die zweite Spannung 15 Volt beträgt.

7. Signaladaptervorrichtung (20) nach Anspruch 1 oder das Netzwerksystem (1) nach Anspruch 2, **dadurch gekennzeichnet, dass** eine Ausgangsleistung des Ausgangssignals größer als 0,54 Watt ist.

8. Signaladaptervorrichtung (20) nach Anspruch 1 oder Netzwerksystem (1) nach Anspruch 2, **dadurch gekennzeichnet, dass** die Eingangsschnittstelle (201) einen SFP-Stecker oder eine SFP-Buchse umfasst und das erste Datensignal ein optisches Signal ist.

9. Signaladaptervorrichtung (20) nach Anspruch 1 oder das Netzwerksystem (1) nach Anspruch 2, **dadurch gekennzeichnet, dass** die Ausgangsschnittstelle (205) einen *Single-Pair-Ethernet-*, SPE, Anschluss oder einen RJ-45-Anschluss umfasst.

## Revendications

1. Dispositif adaptateur de signal (20), recouvert d'un module enfichable à petit facteur de forme, SFP, dans lequel le dispositif adaptateur de signal (20) est conforme aux spécifications d'alimentation du protocole de module enfichable à petit facteur de forme SFF-8419, le dispositif adaptateur de signal (20) étant **caractérisé en ce qu'**il comprend:
une interface d'entrée (201);
un émetteur-récepteur (202), couplé à l'interface d'entrée (201), configuré pour recevoir un premier signal de données via l'interface d'entrée (201) et convertir le premier signal de données en un deuxième signal de données;
un circuit élévateur (203), couplé à l'interface d'entrée (201), configuré pour recevoir une première alimentation électrique ayant une première tension via l'interface d'entrée (201) et convertir la première alimentation électrique en une deuxième alimentation électrique ayant une deuxième tension, la deuxième tension étant supérieure à la première tension;
un circuit mélangeur (204), couplé à l'émetteur-récepteur (202) et au circuit élévateur (203), configuré pour mélanger le deuxième signal de données et la deuxième alimentation électrique en un signal de sortie; et
une interface de sortie (205), couplée au circuit mélangeur (204), configurée pour émettre le signal de sortie.

2. Système réseau (1), comprenant:
un commutateur;
un équipement terminal de réseau; et
un dispositif adaptateur de signal (20), couplé au commutateur et à l'équipement terminal de réseau, et recouvert d'un module enfichable à petit facteur de forme, SFP, dans lequel le dispositif adaptateur de signal (20) est conforme aux spécifications d'alimentation du protocole de module enfichable à petit facteur de forme SFF-8419, le dispositif adaptateur de signal (20) étant **caractérisé en ce qu'**il comprend:
une interface d'entrée (201), couplée au commutateur;
un émetteur-récepteur (202), couplé à l'interface d'entrée (201), configuré pour recevoir un premier signal de données provenant du commutateur via l'interface d'entrée (201), et convertir le premier signal de données en un deuxième signal de données;
un circuit élévateur (203), couplé à l'interface d'entrée (201), configuré pour recevoir une première alimentation électrique ayant une première tension provenant du commutateur via l'interface d'entrée (201), et convertir la première alimentation électrique en une deuxième alimentation électrique ayant une deuxième tension, la deuxième tension étant supérieure à la première tension;
un circuit mélangeur (204), couplé à l'émetteur-récepteur (202) et au circuit élévateur (203), configuré pour mélanger le deuxième signal de données et la deuxième alimentation électrique en un signal de sortie; et
une interface de sortie (205), couplée au circuit mélangeur (204) et à l'équipement terminal de réseau, configurée pour transmettre le signal de sortie à l'équipement terminal de réseau.

3. Dispositif adaptateur de signal (20) selon la revendication 1 ou le système de réseau (1) selon la revendication 2, **caractérisé en ce que** le circuit élévateur (203) est un convertisseur élévateur, un convertisseur à récupération, un convertisseur à inductance primaire asymétrique ou un convertisseur Cuk.

4. Dispositif adaptateur de signal (20) selon la revendication 1 ou le système réseau (1) selon la revendication 2, **caractérisé en ce que** le circuit mélangeur (204) est un circuit de couplage inductif, configuré pour coupler la deuxième alimentation électrique et le deuxième signal de données dans le signal de sortie.

5. Dispositif adaptateur de signal (20) selon la revendication 1 ou système de réseau (1) selon la revendication 2, **caractérisé en ce que** le circuit mélangeur (204) est un circuit d'injection de puissance configuré pour injecter la deuxième alimentation électrique dans le deuxième signal de données afin de générer le signal de sortie.

6. Dispositif adaptateur de signal (20) selon la revendication 1 ou le système de réseau (1) selon la revendication 2, **caractérisé en ce que** la première tension est de 3,3 volts et la deuxième tension est de 15 volts.

7. Dispositif adaptateur de signal (20) selon la revendication 1 ou le système réseau (1) selon la revendication 2, **caractérisé en ce que** la puissance de sortie du signal de sortie est supérieure à 0,54 watt.

8. Dispositif adaptateur de signal (20) selon la revendication 1 ou système de réseau (1) selon la revendication 2, **caractérisé en ce que** l'interface d'entrée (201) comprend un connecteur mâle SFP ou un connecteur femelle SFP, et le premier signal de données est un signal optique.

9. Dispositif adaptateur de signal (20) selon la revendication 1 ou le système de réseau (1) selon la revendication 2, **caractérisé en ce que** l'interface de sortie (205) comprend un connecteur Ethernet à paire unique, SPE, ou un connecteur RJ-45.
